# EUROPEAN PATENT APPLICATION

(11) **EP 4 797 642 A1**
(43) Date of publication of application: **26.08.2026**
(21) Application number: 24884595.0
(22) Date of filing: 25.10.2024
(51) Int. Cl.: H04L 41/147

(54) **NETWORK ANALYSIS METHOD AND DEVICE**

(30) Priority: 03.11.2023 CN 202311464433
(71) Applicant: HUAWEI TECHNOLOGIES CO., LTD., Shenzhen 518129 (CN)
(72) Inventor: TIAN, Zhuoyuan, Shenzhen, Guangdong 518129 (CN); LI, Shitao, Shenzhen, Guangdong 518129 (CN)
(74) Representative: Pfenning, Meinig & Partner mbB
(86) International application number: PCT/CN2024/127346
(87) International publication number: WO 2025/092592

(57) **Abstract**

This application provides a network analysis method and an apparatus, and relates to the field of communication technologies. The method includes: A first apparatus receives a first request from a second apparatus, where the first request is for requesting the first apparatus to determine whether a signaling storm event exists, and the signaling storm event indicates a risk that a network will incur a signaling storm. The first apparatus obtains a network threshold, where the network threshold indicates a signaling quantity that the network is capable of supporting. The first apparatus determines a first report based on the network threshold and a current signaling quantity of the network, where the first report indicates that the signaling storm event exists. According to the foregoing solution, the first apparatus may determine, based on the signaling quantity that the network is capable of supporting and the current signaling quantity of the network, the risk that the network will incur a signaling storm, so that occurrence of the signaling storm can be predicted.

## Description

This application claims priority to Chinese Patent Application No. 202311464433.8, filed with the China National Intellectual Property Administration on November 3, 2023 and entitled "NETWORK ANALYSIS METHOD AND APPARATUS", which is incorporated herein by reference in its entirety.

### TECHNICAL FIELD

This application relates to the field of communication technologies, and more specifically, to a network analysis method and an apparatus.

### BACKGROUND

As operator services and network architectures become increasingly diversified, increasingly heavy service traffic imposes growing pressure on a signaling network, and high pressure accordingly indicates more frequent incidents. A signaling storm means that signaling requests received by a network system from terminal devices exceed a signaling processing capability of the network system, causing network congestion or even an avalanche effect, ultimately rendering network unavailability.

Therefore, how to predict occurrence of a signaling storm is a problem to be urgently resolved.

### SUMMARY

This application provides a network analysis method and an apparatus, to predict occurrence of a signaling storm.

According to a first aspect, a network analysis method is provided. The method may be performed by a first apparatus, or may be performed by a component (for example, a processor, a chip, or a chip system) in the first apparatus, or may be performed by a logical module or software that can implement all or some functions of the first apparatus. The method includes: The first apparatus receives a first request from a second apparatus, where the first request is for requesting the first apparatus to determine whether a signaling storm event exists, and the signaling storm event indicates a risk that a network will incur a signaling storm. The first apparatus obtains a network threshold, where the network threshold indicates a signaling quantity that the network is capable of supporting. The first apparatus determines a first report based on the network threshold and a current signaling quantity of the network, where the first report indicates that the signaling storm event exists.

For example, the first apparatus may be a service provider (service provider) of a management data analytics service (management data analytics service, MDAS), or the first apparatus may be a management data analytics function (management data analytics function, MDAF).

According to the foregoing solution, the first apparatus may determine, based on the signaling quantity that the network is capable of supporting and the current signaling quantity of the network, the risk that the network will incur a signaling storm, so that occurrence of the signaling storm can be predicted.

With reference to the first aspect, in some implementations of the first aspect, the first report includes at least one of abnormal network element information, type information, cause information, ratio information, or duration information. The abnormal network element information indicates a network element whose traffic is abnormal when the signaling storm event occurs. The type information indicates that an event type is signaling storm. The cause information indicates a cause of the signaling storm event. The ratio information indicates a ratio of the current signaling quantity to a historical signaling quantity of the network. The duration information indicates predicted duration of the signaling storm event.

According to the foregoing solution, the second apparatus can improve the network based on the information in the first report, to help the second apparatus prevent the occurrence of the signaling storm.

With reference to the first aspect, in some implementations of the first aspect, that the first apparatus obtains the network threshold includes: The first apparatus receives the network threshold from the second apparatus.

According to the foregoing solution, the network threshold may be sent by the second apparatus to the first apparatus. In this way, the first apparatus can predict, based on the network threshold required by the second apparatus, whether the signaling storm event exists, to achieve expected target of the second apparatus for preventing the signaling storm.

With reference to the first aspect, in some implementations of the first aspect, the method further includes: The first apparatus sends, to the second apparatus, a maximum signaling quantity that the network is capable of supporting.

According to the foregoing solution, the first apparatus may send, to the second apparatus, the maximum signaling quantity that the network is capable of supporting, so that the second apparatus can obtain the maximum signaling quantity that the network is capable of supporting. The second apparatus can improve the network based on the maximum signaling quantity that the network is capable of supporting, to help the second apparatus prevent the occurrence of the signaling storm.

With reference to the first aspect, in some implementations of the first aspect, the network threshold is less than the maximum signaling quantity that the network is capable of supporting.

According to the foregoing solution, the network threshold is less than the maximum signaling quantity that the network is capable of supporting, so that the first apparatus determines, when the risk of the signaling storm occurring in the network is low, that the signaling storm event exists. Further, in the foregoing solution, the second apparatus can improve the network when the risk of the signaling storm is low, to improve an effect of preventing the signaling storm.

With reference to the first aspect, in some implementations of the first aspect, the method further includes: The first apparatus determines, based on availability parameters of a plurality of network elements in the network, the maximum signaling quantity that the network is capable of supporting, where the plurality of network elements in the network include a first network element, and an availability parameter of the first network element is performance management data of the first network element in the case of a first preset signaling quantity.

According to the foregoing solution, the first apparatus may determine the maximum signaling quantity that the network is capable of supporting, so that the second apparatus can obtain the maximum signaling quantity that the network is capable of supporting. The second apparatus can improve the network based on the maximum signaling quantity that the network is capable of supporting, to help the second apparatus prevent the occurrence of the signaling storm.

With reference to the first aspect, in some implementations of the first aspect, the method further includes: The first apparatus obtains the performance management data of the first network element and virtual resource usage information of the first network element. The first apparatus determines the availability parameter of the first network element based on the performance management data of the first network element and the virtual resource usage information of the first network element.

According to the foregoing solution, the first apparatus may determine an availability parameter of the network element. The availability parameter is performance management data of the network element in the case of a preset signaling quantity. Therefore, the availability parameter of the network element can describe availability of the network element under signaling impact, to help prevent the occurrence of the signaling storm.

With reference to the first aspect, in some implementations of the first aspect, the method further includes: The first apparatus sends the availability parameter of the first network element to the second apparatus.

According to the foregoing solution, the first apparatus may send the availability parameter of the network element to the second apparatus. The availability parameter is the performance management data of the network element in the case of the preset signaling quantity. Therefore, the availability parameter of the network element can describe the availability of the network element under the signaling impact, to help the second apparatus prevent the occurrence of the signaling storm.

With reference to the first aspect, in some implementations of the first aspect, the method further includes: The first apparatus receives a second request from the second apparatus, where the second request is for requesting the first apparatus to determine the availability parameters of the plurality of network elements in the network.

According to the foregoing solution, the first apparatus may request the second apparatus to determine the availability parameter of the network element. The availability parameter is the performance management data of the network element in the case of the preset signaling quantity, and the availability parameter of the network element can describe the availability of the network element under the signaling impact. Therefore, the foregoing solution helps achieve the expected target of the second apparatus for preventing the signaling storm.

With reference to the first aspect, in some implementations of the first aspect, the plurality of network elements in the network further include a second network element, and the method further includes: The first apparatus obtains an availability parameter of the second network element, where the availability parameter of the second network element is performance management data of the second network element in the case of a second preset signaling quantity, and when the signaling storm occurs, the availability parameter of the second network element does not meet the expected target. The first apparatus determines a second report based on the availability parameter of the second network element, where the second report indicates to scale the second network element.

According to the foregoing solution, when the availability parameter of the second network element does not meet the expected target, the first apparatus may recommend that the second apparatus scale the second network element, to prevent the occurrence of the signaling storm.

With reference to the first aspect, in some implementations of the first aspect, the expected target includes expected duration for resolving the signaling storm and/or a maximum user quantity that the network is capable of supporting.

According to the foregoing solution, the expected target may include the expected duration for resolving the signaling storm and/or the maximum user quantity that the network is capable of supporting. The second apparatus provides an improvement recommendation for the network element based on the foregoing expected target, so that the network element can meet the expected duration and the maximum user quantity in the expected target, to enhance network availability.

With reference to the first aspect, in some implementations of the first aspect, the method further includes: The first apparatus receives a third request from the second apparatus, where the third request is for requesting the first apparatus to provide a recommendation for the network element in the network, and the third request includes the expected target.

According to the foregoing solution, the first apparatus may request the second apparatus to provide the improvement recommendation for the network element, and the request may carry the expected target, to help achieve the expected target of the second apparatus for preventing the signaling storm.

With reference to the first aspect, in some implementations of the first aspect, the method further includes: The first apparatus registers a first management data analytics service MDAS and a second MDAS, where capability information in a registration parameter corresponding to the first MDAS indicates that the first MDAS is capable of determining whether the signaling storm event exists, and capability information in a registration parameter corresponding to the second MDAS indicates that the second MDAS is capable of providing a recommendation for the network element in the network.

According to the foregoing solution, the second apparatus may access an access address of the first MDAS or an access address of the second MDAS based on a requirement, to avoid a delay caused by identifying an intention of the second apparatus and invoking a corresponding MDAS by the first apparatus, so as to improve efficiency of network analysis.

According to a second aspect, a network analysis method is provided. The method may be performed by a second apparatus, or may be performed by a component (for example, a processor, a chip, or a chip system) in the second apparatus, or may be performed by a logical module or software that can implement all or some functions of the second apparatus. The method includes: The second apparatus sends a first request to a first apparatus, where the first request is for requesting the first apparatus to determine whether a signaling storm event exists, and the signaling storm event indicates a risk that a network will incur a signaling storm; and the second apparatus receives a first report from the first apparatus, where the first report indicates that the signaling storm event exists.

For example, the second apparatus may be a requester, or an operations support system (operations support system, OSS). Alternatively, the second apparatus may be another apparatus.

According to the foregoing solution, the first apparatus may determine, based on a signaling quantity that the network is capable of supporting and current signaling quantity of the network, the risk that the network will incur a signaling storm, so that occurrence of the signaling storm can be predicted.

With reference to the second aspect, in some implementations of the second aspect, the method further includes: The second apparatus sends a network threshold to the first apparatus, where the network threshold indicates the signaling quantity that the network is capable of supporting.

According to the foregoing solution, the network threshold may be sent by the second apparatus to the first apparatus. In this way, the first apparatus can predict, based on the network threshold required by the second apparatus, whether the signaling storm event exists, to achieve expected target of the second apparatus for preventing the signaling storm.

With reference to the second aspect, in some implementations of the second aspect, the method further includes: The second apparatus receives a maximum signaling quantity that the network is capable of supporting and that is sent from the first apparatus; and the second apparatus determines the network threshold based on the maximum signaling quantity that the network is capable of supporting.

According to the foregoing solution, the second apparatus may determine the network threshold based on the maximum signaling quantity that the network is capable of supporting. In this way, the first apparatus can predict, based on the network threshold required by the second apparatus, whether the signaling storm event exists, to achieve the expected target of the second apparatus for preventing the signaling storm.

With reference to the second aspect, in some implementations of the second aspect, the network threshold is less than the maximum signaling quantity or a maximum signaling multiple that the network is capable of supporting.

According to the foregoing solution, the network threshold is less than the maximum signaling quantity that the network is capable of supporting, so that the first apparatus determines, when the risk of the signaling storm occurring in the network is low, that the signaling storm event exists. Further, in the foregoing solution, the second apparatus can improve the network when the risk of the signaling storm is low, to improve an effect of preventing the signaling storm.

With reference to the second aspect, in some implementations of the second aspect, a plurality of network elements in the network include a first network element, and the method further includes: The second apparatus receives an availability parameter of the first network element from the first apparatus, where the availability parameter of the first network element is performance management data of the first network element in the case of a first preset signaling quantity; and the second apparatus configures the first network element based on the availability parameter of the first network element.

According to the foregoing solution, the second apparatus may configure the availability parameter in the network element. The availability parameter is performance management data of the network element in the case of a preset signaling quantity. Therefore, the availability parameter of the network element can describe availability of the network element under signaling impact, to help the network element prevent the occurrence of the signaling storm.

With reference to the second aspect, in some implementations of the second aspect, the method further includes: The second apparatus sends a second request to the first apparatus, where the second request is for requesting the first apparatus to determine availability parameters of the plurality of network elements in the network.

According to the foregoing solution, the first apparatus may request the second apparatus to determine the availability parameter of the network element. The availability parameter is the performance management data of the network element in the case of the preset signaling quantity, and the availability parameter of the network element can describe the availability of the network element under the signaling impact. Therefore, the foregoing solution helps achieve the expected target of the second apparatus for preventing the signaling storm.

With reference to the second aspect, in some implementations of the second aspect, the plurality of network elements in the network further include a second network element, and the method further includes: The second apparatus receives a second report from the first apparatus, where the second report indicates to scale the second network element, and when the signaling storm occurs, an availability parameter of the second network element does not meet the expected target.

According to the foregoing solution, when the availability parameter of the second network element does not meet the expected target, the first apparatus may recommend that the second apparatus scale the second network element, to prevent the occurrence of the signaling storm.

With reference to the second aspect, in some implementations of the second aspect, the expected target includes expected duration for resolving the signaling storm and/or a maximum user quantity that the network is capable of supporting.

According to the foregoing solution, the expected target may include the expected duration for resolving the signaling storm and/or the maximum user quantity that the network is capable of supporting. The second apparatus provides an improvement recommendation for the network element based on the foregoing expected target, so that the network element can meet the expected duration and the maximum user quantity in the expected target, to enhance network availability.

With reference to the second aspect, in some implementations of the second aspect, a third request includes the expected target, the third request is for requesting the first apparatus to provide a recommendation for the network element in the network, and the method further includes: The second apparatus sends the third request to the first apparatus.

According to the foregoing solution, the first apparatus may request the second apparatus to provide the improvement recommendation for the network element, and the request may carry the expected target, to help achieve the expected target of the second apparatus for preventing the signaling storm.

With reference to the second aspect, in some implementations of the second aspect, the method further includes: The second apparatus queries a registration parameter of the first apparatus; the second apparatus receives a registration parameter of a first management data analytics service MDAS and a registration parameter of a second MDAS, where capability information in the registration parameter corresponding to the first MDAS indicates that the first MDAS is capable of determining whether the signaling storm event exists, and capability information in the registration parameter corresponding to the second MDAS indicates that the second MDAS is capable of providing a recommendation for the network element in the network.

According to the foregoing solution, the second apparatus may access an access address of the first MDAS or an access address of the second MDAS based on a requirement, to avoid a delay caused by identifying an intention of the second apparatus and invoking a corresponding MDAS by the first apparatus, so as to improve efficiency of network analysis.

According to a third aspect, a communication apparatus is provided. The communication apparatus includes a processor. The processor is configured to: cause, by executing a computer program or instructions or via a processing circuit, the communication apparatus to perform the method according to any one of the first aspect and the possible implementations of the first aspect, or cause the communication apparatus to perform the method according to any one of the first aspect and the possible implementations of the second aspect.

In a possible implementation, the communication apparatus further includes a memory. The memory is configured to store the computer program or the instructions. Further, the processor is specifically configured to invoke and run the computer program or the computer instructions stored in the memory, to cause the processor to implement any one of the implementations of the first aspect or the second aspect.

In a possible implementation, the communication apparatus further includes a transceiver (which may also be referred to as a communication interface), and the transceiver is configured to input and/or output a signal through the communication interface. The processor is configured to control the transceiver to send and receive a signal.

According to a fourth aspect, a communication apparatus is provided. The communication apparatus includes a processing circuit (which may also be referred to as a processor) and an input/output interface (which may also be referred to as an interface circuit). The input/output interface is configured to input and/or output a signal. The processing circuit is configured to perform the method according to any one of the first aspect and the possible implementations of the first aspect. Alternatively, the processing circuit is configured to perform the method according to any one of the second aspect and the possible implementations of the second aspect.

In a possible implementation, the processor is configured to communicate with another apparatus via the interface circuit, and perform any one of the implementations of the first aspect or any one of the implementations of the second aspect. There are one or more processors.

According to a fifth aspect, a communication apparatus is provided. The communication apparatus may be a first apparatus, or may be a device, a module, or the like configured to perform a function of the first apparatus. The communication apparatus may be a second apparatus, or may be a device, a module, or the like configured to perform a function of the second apparatus.

In a possible implementation, the communication apparatus may include modules or units in one-to-one correspondence with the methods/operations/steps/actions described in the first aspect. The modules or units may be implemented by a hardware circuit, software, or a combination of a hardware circuit and software.

In another possible implementation, the communication apparatus may include modules or units in one-to-one correspondence with the methods/operations/steps/actions described in the second aspect. The modules or units may be implemented by a hardware circuit, software, or a combination of a hardware circuit and software.

According to a sixth aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to a seventh aspect, a computer program product is provided. The computer program product includes a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a communication apparatus is provided. The communication apparatus includes a processor. The processor is configured to be connected to a memory, and configured to invoke a program stored in the memory, to perform any possible method in the first aspect or any possible method in the second aspect. The memory may be located inside the communication apparatus, or may be located outside the communication apparatus. In addition, there are one or more processors.

In an implementation, the communication apparatus in the third aspect, the fourth aspect, or the fifth aspect may be a chip or a chip system.

According to a ninth aspect, a chip apparatus is provided. The chip apparatus includes a processor, configured to invoke a computer program or computer instructions in a memory, to cause the processor to perform any one of the implementations of the first aspect or any one of the implementations of the second aspect.

Optionally, the processor is coupled to the memory through an interface.

According to a tenth aspect, a communication system is provided. The communication system includes a first apparatus and a second apparatus. The first apparatus is configured to perform the method shown in the first aspect, and the second apparatus is configured to perform the method shown in the second aspect.

According to an eleventh aspect, a communication method is provided. The method is applied to a first apparatus and a second apparatus. The method includes: The first apparatus performs the method according to the first aspect. The second apparatus performs the method shown according to the second aspect.

For descriptions of beneficial effects of any one of the third aspect to the eleventh aspect, refer to descriptions of beneficial effects of the first aspect or the second aspect.

### BRIEF DESCRIPTION OF DRAWINGS

FIG. 1 is a diagram of a network architecture of a communication system to which an embodiment of this application is applicable;
FIG. 2 is a schematic flowchart of signaling processing;
FIG. 3 is a block diagram of a communication system according to an embodiment of this application;
FIG. 4 is a schematic flowchart of a network analysis method according to an embodiment of this application;
FIG. 5 is a schematic flowchart of a registration method according to an embodiment of this application;
FIG. 6 is a schematic flowchart of a registration parameter query method according to an embodiment of this application;
FIG. 7 is a schematic flowchart of a network element capability assessment method according to an embodiment of this application;
FIG. 8 is a schematic flowchart of a network capability assessment method according to an embodiment of this application;
FIG. 9 is a schematic flowchart of a signaling storm event discovery method according to an embodiment of this application;
FIG. 10 is a schematic flowchart of a signaling storm event analysis method according to an embodiment of this application;
FIG. 11 is a schematic flowchart of another network analysis method according to an embodiment of this application;
FIG. 12 is a block diagram of a communication apparatus according to an embodiment of this application;
FIG. 13 is a block diagram of another communication apparatus according to an embodiment of this application; and
FIG. 14 is a block diagram of a communication system according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC) system, an internet of things (internet of things, IoT) communication system, or another communication system.

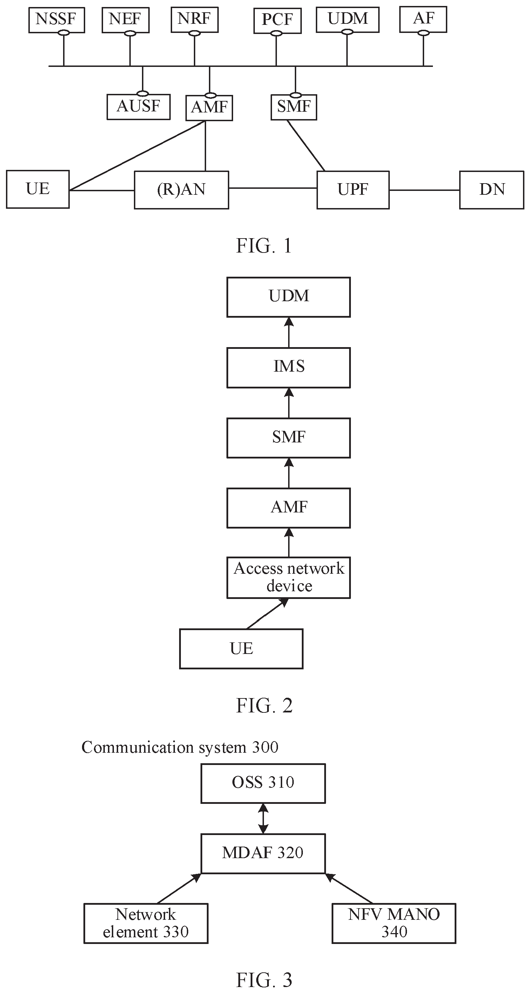

FIG. 1 is a diagram of a network architecture of a communication system to which an embodiment of this application is applicable. The network architecture includes a terminal device, an access network device, an access and mobility management network element, a session management network element, a user plane function network element, a policy control network element, a network slice selection network element, a network repository function network element, a network data analytics network element, a unified data management network element, a unified data repository network element, an authentication service function network element, a network exposure network element, an application function network element, and a data network (data network, DN) connected to an operator network. The terminal device may send service data to the data network and receive service data from the data network via the access network device and the user plane function network element.

The terminal device is a device having a wireless transceiver function, and may be deployed on land, including an indoor device, an outdoor device, a handheld device, a wearable device, or a vehicle-mounted device; may be deployed on a water surface (for example, on a ship); or may be deployed in the air (for example, on an aircraft, a balloon, or a satellite). The terminal device may communicate with a core network through a radio access network (radio access network, RAN), and exchange a voice and/or data with the RAN. The terminal device may be a mobile phone (mobile phone), a tablet computer (Pad), a computer having a wireless transceiver function, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), an uncrewed aerial vehicle, an uncrewed aerial vehicle controller, or the like. Application scenarios are not limited in embodiments of this application. The terminal device may also be referred to as a user equipment (user equipment, UE), a mobile station, a remote station, or the like. A specific technology, a device form, and a name that are used by the terminal device are not limited in embodiments of this application.

The access network device is a device that is in a network and that is configured to connect the terminal device to a wireless network. The access network device may be a node in a radio access network, may also be referred to as a base station, or may be referred to as a radio access network (radio access network, RAN) node (or device). In addition, the RAN may alternatively be equivalent to a next generation radio access network (next generation radio access network, NG-RAN) in a layer 3 relay (relay) architecture. In other words, the RAN may be an NG-RAN. For ease of description, the RAN is sometimes used below to represent the access network device. It may be understood that the RAN may alternatively be an AN.

The access network device may include an evolved NodeB (NodeB, eNB, or e-NodeB, evolved NodeB) in a long term evolution (long term evolution, LTE) system or an LTE-advanced (LTE-Advanced, LTE-A) system, for example, a conventional macro base station eNB and a micro base station eNB in a heterogeneous network scenario; or may include a next generation NodeB (next generation NodeB, gNB) in a 5G or NR system; or may further include a radio network controller (radio network controller, RNC), a NodeB (NodeB, NB), a base station controller (base station controller, BSC), a base transceiver station (base transceiver station, BTS), a transmission reception point (transmission reception point, TRP), a home base station (for example, a home evolved NodeB, or a home NodeB, HNB), a baseband unit (baseband unit, BBU), a baseband pool BBU pool, a Wi-Fi access point (access point, AP), or the like; or may further include a central unit (central unit, CU) and a distributed unit (distributed unit, DU) in a cloud radio access network (cloud radio access network, CloudRAN) system. This is not limited in embodiments of this application. In a split deployment scenario in which the access network device includes the CU and the DU, the CU supports a radio resource control (radio resource control, RRC) protocol, a packet data convergence protocol (packet data convergence protocol, PDCP), a service data adaptation protocol (service data adaptation protocol, SDAP), and the like; and the DU mainly supports a radio link control (radio link control, RLC) layer protocol, a media access control (media access control, MAC) layer protocol, and a physical layer protocol.

The access and mobility management network element is mainly configured for an attach procedure and a tracking area update procedure of a terminal in a mobile network. The access and mobility management network element may provide a non-access stratum (non-access stratum, NAS) message, complete registration management, connection management, reachability management, tracking area list (tracking area list, TA list) allocation, lawful interception, access authorization, authentication, mobility management, and the like, and transparently route a session management (session management, SM) message to the session management network element. In a 5th generation (5th generation, 5G) communication system, the access and mobility management network element may be an access and mobility management function (access and mobility management function, AMF). In a future communication system (for example, a 6G communication system), the mobility management network element may still be an AMF network element, or may have another name. This is not limited in this application.

The session management network element is mainly configured for session and bearer management in the mobile network, for example, session establishment, modification, and release. A specific function is, for example, allocating an internet protocol (internet protocol, IP) address to the terminal or selecting a user plane function network element that provides a packet forwarding function. In a 5G communication system, the session management network element may be a session management function (session management function, SMF). In a future communication system (for example, a 6G communication system), the session management network element may still be an SMF network element, or may have another name. This is not limited in this application.

The user plane function network element is mainly configured to process a user packet, for example, forwarding, charging, or lawful interception is performed. In addition, the user plane function network element is configured to perform functions such as routing and forwarding of user plane data, threshold control, traffic monitoring, and validation. The user plane function network element may be further configured to manage a UE IP address, manage core network (core network, CN) tunnel information, and the like. The user plane function network element may also be referred to as a protocol data unit (protocol data unit, PDU) session anchor (PDU session anchor, PSA). In a 5G communication system, the user plane function network element may be a user plane function (user plane function, UPF). In a future communication system (for example, a 6G communication system), the user plane function network element may still be a UPF network element, or may have another name. This is not limited in this application.

The policy control network element includes a user subscription data management function, a policy control function, a charging policy control function, QoS control, and the like. In a 5G communication system, the policy control network element may be the policy control function (policy control function, PCF). In a future communication system (for example, a 6G communication system), the policy control network element may still be a PCF network element, or may have another name. This is not limited in this application.

The network slice selection function network element is mainly configured to select a proper network slice for a service of the terminal device. In a 5G communication system, the network slice selection network element may be a network slice selection function (network slice selection function, NSSF) network element. In a future communication system (for example, a 6G communication system), the network slice selection network element may still be an NSSF network element, or may have another name. This is not limited in this application.

The network repository function network element is mainly configured to provide registration and discovery functions of a network element or a service provided by the network element. In a 5G communication system, the network repository function network element may be a network repository function (network repository function, NRF). In a future communication system (for example, a 6G communication system), the network repository function network element may still be an NRF network element, or may have another name. This is not limited in this application.

The network data analytics network element may collect data from each network function (network function, NF), for example, the policy control network element, the session management network element, the user plane function network element, the access and mobility management network element, and the application function network element (via the network exposure function network element), and perform analysis and prediction. In a 5G communication system, the network data analytics network element may be a network data analytics function (network data analytics function, NWDAF). In a future communication system (for example, a 6G communication system), the network data analytics network element may still be an NWDAF network element, or may have another name. This is not limited in this application.

The unified data management network element is mainly configured to manage subscription information of the terminal device. In a 5G communication system, the unified data management network element may be a unified data management (unified data management, UDM). In a future communication system (for example, a 6G communication system), the unified data management network element may still be a UDM network element, or may have another name. This is not limited in this application.

The unified data repository network element is mainly configured to store structured data information, including subscription information, policy information, and network data or service data defined in a standard format. In a 5G communication system, the unified data repository network element may be a unified data repository (unified data repository, UDR). In a future communication system (for example, a 6G communication system), the unified data repository network element may still be a UDR network element, or may have another name. This is not limited in this application.

The authentication service function network element is mainly configured to perform security authentication on the terminal device. In a 5G communication system, the authentication service function network element may be an authentication server function (authentication server function, AUSF). In a future communication system (for example, a 6G communication system), the authentication service function network element may still be an AUSF network element, or may have another name. This is not limited in this application.

The network exposure network element may expose some functions of the network to an application in a controlled manner. In a 5G communication system, the network exposure network element may be a network exposure function (network exposure function, NEF). In a future communication system (for example, a 6G communication system), the network exposure network element may still be an NEF network element, or may have another name. This is not limited in this application.

The application function network element may provide service data of various applications for a control plane network element in a communication network of an operator, or obtain data information and control information of the network from the control plane network element in the communication network. In a 5G communication system, the application function network element may be an application function (application function, AF). In a future communication system (for example, a 6G communication system), the application function network element may still be an AF network element, or may have another name. This is not limited in this application. For example, the application function network element may also be referred to as an application server or a service server. In addition, the application function network element may be deployed by the operator network, or may be deployed by a third party.

The data network is mainly configured to provide a data transmission service for the terminal device. The data network may be a private network, for example, a local area network; or may be a public data network (public data network, PDN), for example, the internet (Internet); or may be a dedicated network jointly deployed by operators, for example, providing a configured IP multimedia core network subsystem (IP multimedia core network subsystem, IMS) service. The data network may also come from a third party.

It should be understood that the foregoing network elements or the functions may be network elements in a hardware device, software functions running on dedicated hardware, or virtualized functions instantiated on a platform (for example, a cloud platform). Optionally, the foregoing network elements or functions may be implemented by one device, may be jointly implemented by a plurality of devices, or may be a functional module in one device. This is not specifically limited in embodiments of this application.

It should be further understood that the foregoing names are defined merely for distinguishing between different functions, and should not constitute any limitation on this application. This application does not exclude a possibility that another name is used in a 5G network and another future network. For example, in a 6G network, some or all of the foregoing networks may still use terms in 5G, or may use other names. A name of an interface between the network elements in FIG. 1 is merely an example. In specific implementation, the name of the interface may be another name. This is not specifically limited in this application. In addition, names of messages (or signaling) transmitted between the foregoing network elements are also merely examples, and do not constitute any limitation on functions of the messages.

It should be noted that the foregoing "network element" may also be referred to as an entity, a device, an apparatus, a module, or the like, and there is no particular limitation in this application herein. In addition, in this application, for ease of understanding and description, the description of the "network element" is omitted in some descriptions. For example, the PCF network element is briefly referred to as a PCF. In this case, the "PCF" should be understood as a PCF network element or a PCF entity. Descriptions of same or similar cases are omitted below.

For ease of description, a network element other than the terminal device in FIG. 1 is referred to as a network system below. The terminal device sends signaling (signaling) to the network system. The network system receives the signaling from the terminal device, and processes the signaling by using a plurality of network elements in the network system. It may be understood that a signaling processing capability of each network element is limited, and a signaling processing capability of the entire network system is limited by the signaling processing capability of each network element.

FIG. 2 is a schematic flowchart of signaling processing. Refer to FIG. 2. A UE sends a plurality of pieces of signaling to a network system, and network elements such as an access network device, an AMF, an SMF, an IMS, and a UDM need to be sequentially invoked to process the signaling. Assuming that a frontend (the access network device, the AMF, the SMF, and the IMS) of the UDM processes the signaling from the UE in a normal procedure, the frontend receives and processes a large quantity of signaling, and then sends signaling processing requests to the UDM. The signaling processing requests are for requesting the UDM to further process the signaling from the UE. When the UDM receives excessive signaling processing requests, the UDM may not process all signaling processing requests in a timely manner. Therefore, the UDM needs to take a flow control measure. For example, the UDM may reject receiving the signaling processing requests, or does not process the signaling processing requests for a long time. If the network system rejects processing the signaling from the UE, processing on the signaling by the frontend of the UDM is ineffective, and the UE needs to resend the signaling to the network system. Alternatively, if the signaling sent by the UE is not processed by the network system for a long time, the UE may resend the signaling to the network system. In this case, a large quantity of UEs resend the signaling to the network system. At the same time, the network system has not processed the signaling previously sent by the UE, and the signaling newly sent by the UE is processed by the frontend of the UDM, so that the UDM receives a new signaling processing request. This causes the UDM to have a large quantity of accumulated to-be-processed signaling processing requests, and a quantity of to-be-processed signaling processing requests is increasing continuously. When the foregoing process reaches a specific scale (for example, a large quantity of users cannot obtain services of the network system within one hour), a signaling storm (signaling storm) occurs. The signaling storm causes long-time congestion on the network system, resulting in service unavailability of the network system.

It should be noted that FIG. 2 is merely an example, and does not constitute a limitation on this application. For example, the signaling from the UE may be processed by more or fewer network elements. For another example, the signaling from the UE may be processed by another network element different from the access network device, the AMF, the SMF, the IMS, and the UDM. In addition, the foregoing AMF may be replaced with a mobility management entity (mobility management entity, MME), the foregoing SMF may be replaced with a packet data network gateway (packet data network gateway, PGW), and the foregoing UDM may be replaced with a home subscriber server (home subscriber server, HSS).

The signaling storm occurs because signaling received by the network system from a terminal device exceeds a signaling processing capability of the network system. Consequently, there are a plurality of reasons why the signaling received by the network system from the terminal device exceeds the signaling processing capability of the network system. For example, the reason may be that the terminal device sends a large quantity of signaling in a short time, a fault occurs in the network element in the network system, a fault occurs in the network system, a fault occurs on a radio access network side, a fault occurs on a bearer network side, or another unexpected disaster occurs.

Therefore, how to predict occurrence of the signaling storm is a problem to be urgently resolved.

FIG. 3 is a block diagram of a communication system 300 according to an embodiment of this application.

Refer to FIG. 3. An OSS 310 may interact with an MDAF 320. For example, the MDAF 320 may provide an MDAS service, and the OSS 310 may request, by using the MDAS service provided by the MDAF 320, the MDAF 320 to predict a signaling storm or analyze a network system or a network element in the network system. Based on the request received from the OSS 310, the MDAF 320 may predict the signaling storm or analyze the network system or the network element in the network system, and send a prediction report or an analysis report to the OSS 310.

When the network element 330 is a physical network function (physical network function, PNF), the MDAF 320 may send a request message to the network element 330, to request to obtain information such as performance management (performance management, PM) data. When the network element 330 is a virtual network function (virtual network function, VNF), the MDAF 320 may send a request message to a network function virtualization (network function virtualization, NFV) management and orchestration (management and orchestration, MANO) 340, to request to obtain PM information, virtual resource usage information, and the like. Based on obtained information, the MDAF 320 may predict the signaling storm or analyze the network system or the network element in the network system.

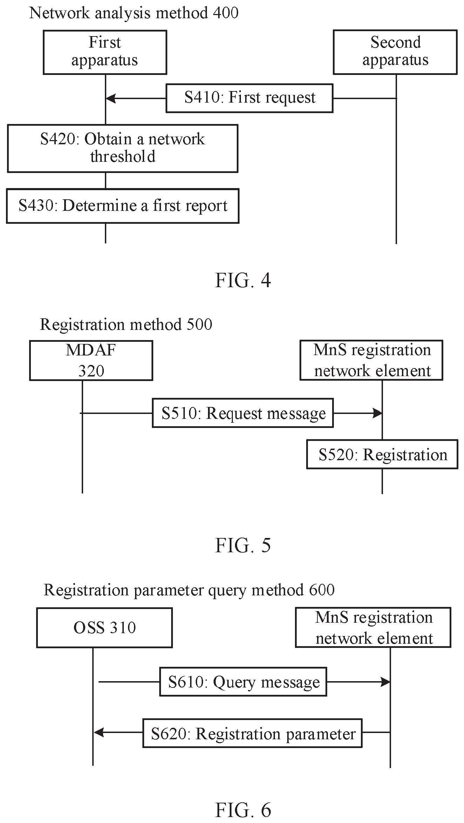

FIG. 4 is a schematic flowchart of a network analysis method 400 according to an embodiment of this application. According to the method 400, occurrence of a signaling storm can be predicted. The following describes the method 400 with reference to FIG. 4.

S410: A first apparatus receives a first request from a second apparatus, where the first request is for requesting the first apparatus to determine whether a signaling storm event exists, and the signaling storm event indicates a risk that a network will incur a signaling storm. Correspondingly, the second apparatus sends the first request to the first apparatus.

For example, the first apparatus may be a service provider of an MDAS, or the first apparatus may be an MDAF 320. However, this is not limited in this application, and the first apparatus may alternatively be another apparatus. The second apparatus may be a requester or an OSS 310. Alternatively, the second apparatus may be another apparatus.

The first request may be any request, and the first request may be carried in any message. The first request may have another name, for example, signaling storm event discovery request. This is not limited in this application.

The signaling storm event indicates the risk that the network will incur a signaling storm. The network in the method 400 may be the foregoing network system. The network may include a plurality of network elements, and the plurality of network elements may be a core network element, an access network device, a bearer network element, and the like. Existence of the signaling storm event indicates the risk that the network will incur a signaling storm. It may be understood that the existence of the signaling storm event does not mean that the signaling storm has occurred, nor does it mean that a fault (fault or failure) has occurred. The existence of the signaling storm event may be further described in another manner, for example, the occurrence of the signaling storm event or emergence of the signaling storm event. This is not limited in this application.

It should be noted that the signaling storm and the fault are two different concepts. When the signaling storm occurs, there may be no fault. For a period of time after the signaling storm occurs, due to continuous accumulation of signaling in a network element of the network, a fault may be caused. However, in this case, a large quantity of resources need to be consumed to handle the fault, and the fault has caused a service loss. It can be learned that the signaling storm and the fault are concepts of different levels. In some embodiments, an MDAF may predict that no fault has occurred or emerged in the network. Alternatively, the MDAF may determine that no fault has occurred or emerged in the network. Alternatively, no fault has occurred or emerged in the network. It may be understood that an alarm does not mean that a fault occurs. The alarm may only indicate that an exception exists in the network, may be cleared by using a self-healing mechanism of the network, and does not affect the network.

S420: The first apparatus obtains a network threshold, where the network threshold indicates a signaling quantity that the network is capable of supporting.

The signaling quantity may be a specific quantity, or may be a relative quantity. In an example in which the signaling quantity is the specific quantity, the signaling quantity may be 1000. In an example in which the signaling quantity is a relative value, the signaling quantity may be 10 times a specific reference. The foregoing reference may be manually set, for example, set to 100. The foregoing reference may alternatively be a specific quantity of signaling received by the network when a previous signaling storm, a previous signaling storm event, or a previous fault occurs. The foregoing reference may alternatively be a specific quantity of signaling received by the network at a time point. The foregoing time point may be a specific time point, for example, a moment in the past, or may be a relative time point, for example, a time point before duration (for example, 30 days) starting from a time point at which S420 is performed. The foregoing duration may be preconfigured. It should be noted that the reference is not limited in this application, and the reference may be set in another manner.

It may be understood that, under a performance requirement, the network has a maximum signaling quantity that can be supported. For example, when a registration success rate is 80% and registration duration of a single user is 10 seconds, there is a maximum quantity of user registration requests that can be supported by the network. In another description, the network threshold indicates a signaling quantity that can be processed by the network when the performance requirement is met. Alternatively, the network threshold indicates a signaling quantity that can be processed by the network under a performance condition. An expected target may be determined by the second apparatus or another apparatus.

The network threshold may indicate the maximum signaling quantity that the network is capable of supporting, or may indicate a signaling quantity that is less than the maximum signaling quantity that the network is capable of supporting. For example, the maximum signaling quantity that the network is capable of supporting is 1000, and the network threshold may be 1000, or may be any value less than 1000. For example, the maximum signaling quantity that the network is capable of supporting is 10 times a specific reference, and the network threshold may be 10 times a specific reference, or may be any value less than 10 times a specific reference.

The maximum signaling quantity that the network is capable of supporting may also be referred to as a maximum increase value of a signaling quantity, or may be referred to as a maximum signaling impact quantity that can be supported by the entire network, or may be referred to as a maximum increase value of a key performance indicator (key performance indicator, KPI) (for example, a maximum session quantity that the network is capable of supporting, or a maximum user registration request quantity that the network is capable of supporting).

Optionally, in another implementation scenario of the foregoing embodiment, S420 includes: The first apparatus receives the network threshold from the second apparatus.

The network threshold may be carried in the first request. In other words, the first request may include the network threshold. In this case, the first apparatus may determine the network threshold based on the first request. Alternatively, the first apparatus may obtain the network threshold from the first request.

However, a specific manner in which the first apparatus receives the network threshold is not limited in this application. For example, the network threshold may be further carried in another message. In other words, another message may include the network threshold. In this case, the first apparatus may determine the network threshold based on the another message. Alternatively, the first apparatus may obtain the network threshold from the another message.

That the first apparatus receives the network threshold from the second apparatus may be understood as that the first apparatus receives information indicating the network threshold.

According to the foregoing solution, the network threshold may be sent by the second apparatus to the first apparatus. In this way, the first apparatus can predict, based on the network threshold required by the second apparatus, whether the signaling storm event exists, to achieve the expected target of the second apparatus for preventing the signaling storm.

Optionally, in another implementation scenario of the foregoing embodiment, S420 includes: The first apparatus determines the network threshold based on availability (availability) parameters of the plurality of network elements in the network.

The availability parameter may also be referred to as an availability indicator. For example, the plurality of network elements include a first network element, a second network element, and a third network element. An availability parameter of the first network element may be performance management data of the first network element in the case of a first preset signaling quantity. An availability parameter of the second network element may be performance management data of the second network element in the case of a second preset signaling quantity. An availability parameter of the third network element may be performance management data of the third network element in the case of a third preset signaling quantity.

The first preset signaling quantity, the second preset signaling quantity, and the third preset signaling quantity may be specific quantities, or may be relative quantities. For meanings of the specific quantity and the relative quantity, refer to the foregoing embodiment of S420. The first preset signaling quantity, the second preset signaling quantity, and the third preset signaling quantity may be completely the same, partially the same, or completely different. The following uses the first preset signaling quantity as an example. For embodiments of the second preset signaling quantity and the third preset signaling quantity, refer to the embodiment of the first preset signaling quantity.

One or more first preset signaling quantities may be set. Therefore, there may be one or more availability parameters of the first network element. When there are a plurality of availability parameters of the first network element, the availability parameters of the first network element may indicate the performance management data or KPIs of the first network element under different signaling impact. A maximum signaling quantity that can be theoretically supported by each of the plurality of network elements. The first preset signaling quantity may be a maximum signaling quantity that the first network element is capable of supporting, or may be a signaling quantity that is less than the maximum signaling quantity that can be supported. For example, the maximum signaling quantity that the first network element is capable of supporting is 500, and the first preset signaling quantity may be 500, or may be any value less than 500. For example, the maximum signaling quantity that the first network element is capable of supporting is 5 times a specific reference, and the first preset signaling quantity may be 5 times a specific reference, or may be any value less than 5 times a specific reference.

The foregoing uses only an example in which the plurality of network elements include the first network element, the second network element, and the third network element. This is not limited in this application. For example, the plurality of network elements may include more or fewer network elements.

The performance management data may be PM data. For example, when the first network element is an AMF, the performance management data of the first network element may be a quantity of registered users, a registration success rate, registration duration of a single user, or maximum registration duration. It may be understood that the performance management data may further include another parameter, for example, average registration duration of a plurality of users, maximum registration duration of the plurality of users, and a quantity of registration failures.

A lower availability parameter of a network element indicates a smaller signaling quantity that the network element is capable of supporting. A higher availability parameter of a network element indicates a larger signaling quantity that the network element is capable of supporting. In other words, in the case of a larger signaling quantity, a lower availability parameter of a network element indicates that the network element may not meet the expected target. In the case of a larger signaling quantity, a higher availability parameter of a network element indicates that the network element may meet the expected target.

The first apparatus comprehensively analyzes the availability parameters of the plurality of network elements in the network, and may determine the signaling quantity that the network is capable of supporting, that is, the network threshold. A specific manner of determining the network threshold based on the availability parameter is not limited in this application. For example, the network threshold may be determined according to an artificial intelligence (artificial intelligence, AI) algorithm, or may be determined according to another algorithm.

S430: The first apparatus determines a first report based on the network threshold and a current signaling quantity of the network, where the first report indicates that the signaling storm event exists.

The current signaling quantity is a concept relative to a historical signaling quantity. The current signaling quantity may be a signaling quantity used when S430 is performed, or may be a signaling quantity used when S410 or S420 is performed. The historical signaling quantity is a signaling quantity in a past period of time. For example, the historical signaling quantity may be a "reference" for the relative quantity of signaling. In other words, the foregoing reference may alternatively be a specific quantity of signaling received by the network when a previous signaling storm, a previous signaling storm event, or a previous fault occurs. The historical signaling quantity may be a specific quantity of signaling received by the network at a time point. The foregoing time point may be a specific time point, for example, a moment in the past, or may be a relative time point, for example, a time point in duration (for example, 30 days) starting from a time point at which S430 is performed. The foregoing duration may be preconfigured. It should be noted that the reference is not limited in this application, and the reference may be set in another manner.

In an example, the network threshold is a specific signaling quantity that the network is capable of supporting. S430 includes: When the current signaling quantity is greater than or equal to the network threshold, the first apparatus determines that the signaling storm event exists.

In another example, the network threshold is a relative signaling quantity that the network is capable of supporting. S430 includes: The first apparatus obtains a historical signaling quantity of the network. When a multiple of the current signaling quantity relative to the historical signaling quantity is greater than or equal to the network threshold, the first apparatus determines that the signaling storm event exists.

The current signaling quantity may include a quantity of user registration request signaling, a quantity of sessions (sessions), and the like. This is not limited in this application.

It should be noted that a specific manner of determining the first report is not limited in this application. In addition to the foregoing two examples, the first report may be determined in another manner. For example, the first report may be determined by using the AI algorithm or another algorithm.

In addition, a specific name of the first report is not limited in this application, and the first report may also have another name, for example, indication information, report information, feedback information, or feedback list. The first report is a name of information.

The first report may indicate that the signaling storm event exists. Alternatively, the first report may indicate that the signaling storm event occurs or emerges. Alternatively, the first report may indicate the risk that the network will incur a signaling storm.

In an alternative of S430, the method 400 may include: The first apparatus determines another report based on the network threshold and a current signaling quantity of the network, where the another report indicates that the signaling storm event does not exist. Specific details of this embodiment are opposite to the descriptions of the embodiment related to S430.

According to the foregoing solution, the first apparatus may determine, based on the signaling quantity that the network is capable of supporting and the current signaling quantity of the network, the risk that the network will incur a signaling storm, so that the occurrence of the signaling storm can be predicted.

Optionally, in another implementation scenario of the foregoing embodiment, the method 430 further includes: The first apparatus sends the first report to the first apparatus. Correspondingly, the second apparatus receives the first report from the first apparatus.

That the first apparatus sends the first report to the second apparatus may be understood as that the first apparatus sends, to the second apparatus, information indicating the first report. The first report may be carried in any message. A specific name of the first report is not limited in this application, and the first report may also have another name, for example, indication information, report information, feedback information, or feedback list. The first report is a name of information.

Optionally, in another implementation scenario of the foregoing embodiment, the first report includes at least one of abnormal network element information, type information, cause information, ratio information, or duration information. The abnormal network element information indicates a network element whose traffic is abnormal when the signaling storm event occurs. The type information indicates that an event type is signaling storm. The cause information indicates a cause of the signaling storm event. The ratio information indicates a ratio of the current signaling quantity to the historical signaling quantity of the network. The duration information indicates predicted duration of the signaling storm event.

The first apparatus may determine at least one of the abnormal network element information, the type information, the cause information, the ratio information, or the duration information based on the PM data such as the KPI. For example, the information may be determined according to the AI algorithm or another algorithm.

Table 1 shows an embodiment of the first report. It should be noted that Table 1 is merely an example, and does not constitute a limitation on this application. For example, the first report may include more or less information than Table 1. For another example, in the first report, any information in Table 1 may be replaced with other information.

**Table 1 Information elements (information elements, IEs) of the first report**

| |
|---|
| Failure prediction target (failure prediction object) |
| Potential failure type (potential failure type) |
| Event occurrence moment (event time) |
| Event identifier (issue ID) |
| Perceived severity (perceived severity) |
| Root cause of the signaling storm (root cause of signaling storm) |
| Changes in KPI (changes in KPI) |
| Duration of the signaling storm (duration of signaling storm) |

The abnormal network element information may be carried in a field corresponding to the fault prediction target. For example, the fault prediction target may indicate the network element whose traffic is abnormal when the signaling storm event occurs. An availability parameter of the network element whose traffic is abnormal is less than a preset threshold when the signaling storm event occurs. Alternatively, the availability parameters of the plurality of network elements in the network that are used when the signaling storm event occurs are sorted in descending order, and the network element whose traffic is abnormal is a network element with a lower ranking.

The type information may be carried in a field corresponding to the potential fault type. In this case, the potential fault type may indicate that the event type is signaling storm. Based on the type information, the second apparatus is capable of determining (or learn) that the signaling storm event occurs. In other words, the type information may indicate that the signaling storm event occurs or emerges. In other words, the type information may indicate that the signaling storm event exists. The potential fault type may alternatively indicate other types, such as device fault (equipment alarm), software or processing fault (processing error alarm), fault of a quality of service degradation type (quality of service alarm), or fault of a security attack type (security service or mechanism violation).

The event occurrence moment may indicate an occurrence moment or an occurrence time point of the signaling storm event. For example, the first apparatus determines, at a moment A, that the signaling storm event occurs, and the event occurrence moment may indicate the moment A. The event identifier may indicate an identifier of the signaling storm event. The perceived severity may indicate severity of the signaling storm event. For example, the perceived severity may be classified into three levels: high, medium, and low. High perceived severity indicates high severity of the signaling storm event.

The cause information may be carried in a field corresponding to the root cause of the signaling storm. For example, the cause information may indicate a cause of occurrence of the signaling storm such as a network interruption, a disaster, or a fault.

The ratio information may be carried in a field corresponding to the changes in the KPI. For example, if the ratio of the current signaling quantity to the historical signaling quantity is 10, or the multiple of the current signaling quantity relative to the historical signaling quantity is 10, the ratio information or the changes in the KPI may indicate 10.

The duration information may be carried in a field corresponding to the duration of the signaling storm. For example, the duration information may indicate 1000 minutes, and this indicates that the duration of the signaling storm event is 1000 minutes. The self-healing mechanism for the signaling storm takes a long time. Therefore, the occurrence of the signaling storm needs to be prevented.

A specific name of the first report is not limited in this application, and the first report may also have another name, for example, indication information, report information, feedback information, or feedback list. The first report is a name of information.

According to the foregoing solution, the second apparatus can improve the network based on the information in the first report, to help the second apparatus prevent the occurrence of the signaling storm.

Optionally, in another implementation scenario of the foregoing embodiment, the method 400 further includes: The first apparatus sends, to the second apparatus, the maximum signaling quantity that the network is capable of supporting. Correspondingly, the second apparatus receives, from the first apparatus, the maximum signaling quantity that the network is capable of supporting.

For example, the first apparatus may determine, based on the availability parameters of the plurality of network elements in the network, the maximum signaling quantity that the network is capable of supporting. A specific manner of determining the maximum signaling quantity that the network is capable of supporting is not limited in this application. For example, the maximum signaling quantity that the network is capable of supporting may be determined according to the AI algorithm, or may be determined according to another algorithm.

That the first apparatus sends, to the second apparatus, the maximum signaling quantity that the network is capable of supporting may be understood as that the first apparatus sends, to the second apparatus, information indicating the maximum signaling quantity that the network is capable of supporting.

According to the foregoing solution, the first apparatus may send, to the second apparatus, the maximum signaling quantity that the network is capable of supporting, so that the second apparatus can obtain the maximum signaling quantity that the network is capable of supporting. The second apparatus can improve the network based on the maximum signaling quantity that the network is capable of supporting, to help the second apparatus prevent the occurrence of the signaling storm.

Optionally, in another implementation scenario of the foregoing embodiment, the method 400 further includes: The second apparatus determines the network threshold based on the maximum signaling quantity that the network is capable of supporting.

In an example, the second apparatus may determine that the network threshold is the maximum signaling quantity that the network is capable of supporting. In another example, the second apparatus may determine, as the network threshold, a signaling quantity that is less than the maximum signaling quantity that the network is capable of supporting.

According to the foregoing solution, the second apparatus may determine the network threshold based on the maximum signaling quantity that the network is capable of supporting. In this way, the first apparatus can predict, based on the network threshold required by the second apparatus, whether the signaling storm event exists, to achieve the expected target of the second apparatus for preventing the signaling storm.

Optionally, in another implementation scenario of the foregoing embodiment, the network threshold is less than the maximum signaling quantity that the network is capable of supporting.

For example, the maximum signaling quantity that the network is capable of supporting is 1000, and the network threshold may be 800. For another example, the maximum signaling quantity that the network is capable of supporting is 10 times a specific reference, and the network threshold may be 8 times a specific reference.

It may be understood that, if the network threshold is equal to the maximum signaling quantity that the network is capable of supporting, when the current signaling quantity is close to the maximum signaling quantity that the network is capable of supporting, the first apparatus may determine that the signaling storm event exists. In this case, the risk of the signaling storm occurring in the network is high, and even a fault may occur. If the network threshold is less than the maximum signaling quantity that the network is capable of supporting, when the current signaling quantity is less than the maximum signaling quantity that the network is capable of supporting, the first apparatus may determine that the signaling storm event exists. In this case, the risk of the signaling storm occurring in the network is low, and a risk of a fault is low, to improve an effect of preventing the signaling storm.

According to the foregoing solution, the network threshold is less than the maximum signaling quantity that the network is capable of supporting, so that the first apparatus determines, when the risk of the signaling storm occurring in the network is low, that the signaling storm event exists. Further, in the foregoing solution, the second apparatus can improve the network when the risk of the signaling storm is low, to improve the effect of preventing the signaling storm.

Optionally, in another implementation scenario of the foregoing embodiment, the method 400 further includes: The first apparatus determines, based on the availability parameters of the plurality of network elements in the network, the maximum signaling quantity that the network is capable of supporting, where the plurality of network elements in the network include the first network element, and the availability parameter of the first network element is the performance management data of the first network element in the case of the first preset signaling quantity.

The availability parameter may also be referred to as an availability indicator. The first preset signaling quantity may be a specific quantity, or may be a relative quantity. For meanings of the specific quantity and the relative quantity, refer to the foregoing embodiment of S420.

The first preset signaling quantity may be the maximum signaling quantity that the first network element is capable of supporting, or may be a signaling quantity that is less than the maximum signaling quantity that can be supported. For example, the maximum signaling quantity that the first network element is capable of supporting is 500, and the first preset signaling quantity may be 500, or may be any value less than 500. For example, the maximum signaling quantity that the first network element is capable of supporting is 5 times a specific reference, and the first preset signaling quantity may be 5 times, or may be any value less than 5 times a specific reference.

The performance management data may be PM data. For example, when the first network element is an AMF, the performance management data of the first network element may be a quantity of registered users, a registration success rate, registration duration of a single user, or maximum registration duration. It may be understood that the performance management data may further include another parameter, for example, average registration duration of a plurality of users, maximum registration duration of the plurality of users, and a quantity of registration failures.

A lower availability parameter of a network element indicates a smaller signaling quantity that the network element is capable of supporting. A higher availability parameter of a network element indicates a larger signaling quantity that the network element is capable of supporting. In other words, in the case of a larger signaling quantity, a lower availability parameter of a network element indicates that the network element may not meet the expected target. In the case of a larger signaling quantity, a higher availability parameter of a network element indicates that the network element may meet the expected target.

The first apparatus comprehensively analyzes the availability parameters of the plurality of network elements in the network, and may determine the maximum signaling quantity that the network is capable of supporting. A specific manner of determining, based on the availability parameter, the maximum signaling quantity that the network is capable of supporting is not limited in this application. For example, the maximum signaling quantity may be determined according to the AI algorithm, or may be determined according to another algorithm.

According to the foregoing solution, the first apparatus may determine the maximum signaling quantity that the network is capable of supporting, so that the second apparatus can obtain the maximum signaling quantity that the network is capable of supporting. The second apparatus can improve the network based on the maximum signaling quantity that the network is capable of supporting, to help the second apparatus prevent the occurrence of the signaling storm.

Optionally, in another implementation scenario of the foregoing embodiment, the method 400 further includes: The first apparatus obtains the performance management data of the first network element and virtual resource usage information of the first network element. The first apparatus determines the availability parameter of the first network element based on the performance management data of the first network element and the virtual resource usage information of the first network element.

For example, the first apparatus may obtain the performance management data and the virtual resource usage information of the first network element from an NFV MANO 340. For example, the first apparatus may send a request message to the NFV MANO 340, to request to obtain the performance management data and the virtual resource usage information of the first network element. The NFV MANO 340 may send the performance management data and the virtual resource usage information of the first network element to the first network element based on the request message.

The performance management data may be PM data. For example, when the first network element is an AMF, the performance management data of the first network element may be a quantity of registered users, a registration success rate, registration duration of a single user, or maximum registration duration. It may be understood that the performance management data may further include another parameter, for example, average registration duration of a plurality of users, maximum registration duration of the plurality of users, and a quantity of registration failures.

The virtual resource usage information may indicate a usage status of a virtual resource. The virtual resource may include at least one of a virtual processor (virtual processor), a virtual memory (virtual memory), or a virtual disk (virtual disk). The virtual resource may further include another resource. The virtual resource usage information may include virtual processor utilization, virtual memory utilization, virtual disk utilization, and the like. The virtual resource usage information may further include other information.

A specific manner of determining the availability parameter based on the performance management data and the virtual resource usage information is not limited in this application. For example, the availability parameter may be determined according to the AI algorithm, or may be determined according to another algorithm. It should be noted that the foregoing uses only the first network element as an example, and in this embodiment of this application, an availability parameter of another network element may be further determined. For example, the first apparatus may determine the availability parameter of the second network element based on performance management data of the second network element and virtual resource usage information of the second network element.

According to the foregoing solution, the first apparatus may determine the availability parameter of the network element. The availability parameter is performance management data of the network element in the case of a preset signaling quantity. Therefore, the availability parameter of the network element can describe availability of the network element under signaling impact, to help prevent the occurrence of the signaling storm.

Optionally, in another implementation scenario of the foregoing embodiment, the method 400 further includes: The first apparatus sends the availability parameter of the first network element to the second apparatus. Correspondingly, the second apparatus receives the availability parameter of the first network element from the first apparatus, where the availability parameter of the first network element is the performance management data of the first network element in the case of the first preset signaling quantity.

According to the foregoing solution, the first apparatus may send the availability parameter of the network element to the second apparatus. The availability parameter is the performance management data of the network element in the case of the preset signaling quantity. Therefore, the availability parameter of the network element can describe the availability of the network element under the signaling impact, to help the second apparatus prevent the occurrence of the signaling storm.

Optionally, in another implementation scenario of the foregoing embodiment, the method 400 further includes: The second apparatus configures the first network element based on the availability parameter of the first network element.

For example, the second apparatus may send configuration information to the first network element, where the configuration information includes the availability parameter of the first network element.

According to the foregoing solution, the second apparatus may configure the availability parameter in the network element. The availability parameter is the performance management data of the network element in the case of the preset signaling quantity. Therefore, the availability parameter of the network element can describe the availability of the network element under the signaling impact, to help the network element prevent the occurrence of the signaling storm.

Optionally, in another implementation scenario of the foregoing embodiment, the method 400 further includes: The first apparatus receives a second request from the second apparatus, where the second request is for requesting the first apparatus to determine the availability parameters of the plurality of network elements in the network. Correspondingly, the second apparatus sends the second request to the first apparatus.

For example, the second request may include a network element identifier (also referred to as a network element type) and a target signaling type. For example, the second request includes an identifier of the AMF and a registration request. In this case, the first apparatus may determine an availability parameter of the AMF in the case of a specific quantity of registration requests based on the second request.

The second request may be any request, and the second request may be carried in any message. The second request may have another name, for example, network element capability assessment request or network element availability assessment request. This is not limited in this application.

The second request may be triggered by an event, for example, a holiday event or a network upgrade event. In other words, when an event occurs, the second apparatus may send the second request to the first apparatus. The second request may alternatively be actively sent by the second apparatus. In other words, the second apparatus sends the second request without depending on triggering of another event.

According to the foregoing solution, the first apparatus may request the second apparatus to determine the availability parameter of the network element. The availability parameter is the performance management data of the network element in the case of the preset signaling quantity, and the availability parameter of the network element can describe the availability of the network element under the signaling impact. Therefore, the foregoing solution helps achieve the expected target of the second apparatus for preventing the signaling storm.

Optionally, in another implementation scenario of the foregoing embodiment, the plurality of network elements in the network further include the second network element. The method 400 further includes: The first apparatus obtains the availability parameter of the second network element, where the availability parameter of the second network element is the performance management data of the second network element in the second preset signaling quantity, the second network element is a bottleneck network element, and when the signaling storm occurs, the availability parameter of the second network element does not meet the expected target. The first apparatus determines a second report based on the availability parameter of the second network element, where the second report indicates to scale the second network element. Correspondingly, the second apparatus receives the second report from the first apparatus.

In an example, the first apparatus may determine the availability parameter of the second network element based on the performance management data of the second network element and the virtual resource usage information of the second network element, so that the first apparatus obtains the availability parameter of the second network element. In another example, the first apparatus may obtain the availability parameter of the second network element from the NFV MANO 340 or the second apparatus. The availability parameter may have been configured for the second network element. In this case, the first apparatus may send a request message to the NFV MANO 340 or the second apparatus, to request the NFV MANO 340 or the second apparatus to feed back the availability parameter of the second network element. The NFV MANO 340 or the second apparatus queries configuration information of the second network element, to obtain the availability parameter of the second network element, and sends the availability parameter of the second network element to the first apparatus. The first apparatus receives the availability parameter of the second network element from the NFV MANO 340 or the second apparatus, so that the first apparatus obtains the availability parameter of the second network element.

The first apparatus may determine, based on the availability parameters of the plurality of network elements in the network, that the second network element is the bottleneck network element. For example, if the availability parameter of the second network element is less than an availability parameter of another network element, it may be determined that the second network element is the bottleneck network element. The bottleneck network element may be one or more network elements.

In some embodiments, the expected target includes expected duration for resolving the signaling storm and/or a maximum user quantity that the network is capable of supporting.

According to the foregoing solution, the expected target may include the expected duration for resolving the signaling storm and/or the maximum user quantity that the network is capable of supporting. The second apparatus provides an improvement recommendation for the network element based on the foregoing expected target, so that the network element can meet the expected duration and the maximum user quantity in the expected target, to enhance network availability.

A network element whose availability parameter does not meet the expected target may be referred to as a bottleneck network element, and the bottleneck network element is a network element that is in the plurality of network elements in the network and that has weak resistance to the signaling impact. When the signaling storm occurs, an availability parameter of the bottleneck network element does not meet the expected target. Therefore, the bottleneck network element cannot meet the expected duration for resolving the signaling storm, or cannot meet the maximum user quantity that needs to be supported by the network. In this case, the bottleneck network element cannot meet the expected target by using other means such as traffic control on the bottleneck network element. In this case, scaling the bottleneck network element can avoid the occurrence of the signaling storm.

Scaling the second network element may be understood as adding a virtual resource for the second network element, for example, increasing an input/output upper limit of a virtual processor of the second network element, a capacity of a virtual memory, or a capacity of a virtual disk.

In some embodiments, the first apparatus determines the second report based on the availability parameter of the second network element and the expected target.

In an example, the first apparatus may determine the second report based on the availability parameter of the second network element and convergence information. The convergence information indicates expected duration in which the network completes, after the signaling storm occurs, processing signaling received by the network in a preset time window.

For example, the preset time window may be 180 seconds. Within 180 seconds after the signaling storm occurs, the network receives a plurality of connection requests from a terminal device. The convergence information may indicate that duration consumed by the network to complete processing of these connection requests is 200 seconds. The expected duration indicated by the convergence information may be calculated from a start moment of the preset time window, in other words, may be calculated from a moment at which the signaling storm occurs. For example, when the expected duration indicated by the convergence information is less than or equal to a duration threshold, the first apparatus may recommend that the second apparatus scale the second network element, so that the network can more quickly meet the expected duration in which the second apparatus expects to resolve the signaling storm. The duration threshold may be preset.

In another example, the first apparatus may determine the second report based on the availability parameter of the second network element, user quantity information, and the convergence information. The user quantity information indicates a quantity of user online requests that are received by the network in the preset time window and that can be processed by the network after the signaling storm occurs. In other words, the user quantity information may indicate the maximum user quantity that can be supported by a network.

In an example of combining the user quantity information and the convergence information, within 180 seconds after the signaling storm occurs, the network receives a plurality of user online requests from the terminal device, and the second network element expects the network to process 100 user online requests within 200 seconds. It may be understood that the user quantity information may be from the second apparatus. In other words, in some embodiments, the second apparatus sends the user quantity information to the first apparatus, and correspondingly, the first apparatus receives the user quantity information from the second apparatus. Therefore, the user quantity information is included in the expected target of the second apparatus.

A recommendation that is for scaling the second network element and that is indicated by the first report may be referred to as a scaling recommendation (scaling recommendation). It should be noted that the second report, the convergence information, and the user quantity information may have other names. This is not limited in this application.

According to the foregoing solution, when the second network element is a bottleneck network element, the first apparatus may recommend that the second apparatus scale the second network element, to prevent the occurrence of the signaling storm.

In some other embodiments, the second report may further include a flow control recommendation (flow control recommendation). For example, the flow control recommendation may indicate to configure a new flow control parameter for the third network element. Table 2 is an example of a recommendation report.

**Table 2 IEs of the recommendation report**

| |
|---|
| Flow control configuration recommendation for a flow control network element (flowControlRecommendations) |
| Scaling recommendation for the bottleneck network element (sclingRecommendations) |

Recommendation information indicating to perform flow control configuration on the third network element may be carried in the flow control configuration recommendation for the flow control network element, and recommendation information indicating to scale the second network element may be carried in the scaling recommendation for the bottleneck network element.

Optionally, in another implementation scenario of the foregoing embodiment, the method 400 further includes: The first apparatus receives a third request from the second apparatus, where the third request includes the expected target, and the third request is for requesting the first apparatus to provide a recommendation for the network element in the network. Correspondingly, the second apparatus sends the third request to the first apparatus.

The third request may be any request, and the third request may be carried in any message. The third request may have another name, for example, signaling storm event analysis request. This is not limited in this application. In an example, the third request may further carry the availability parameter of the network element.

According to the foregoing solution, the first apparatus may request the second apparatus to provide the improvement recommendation for the network element, and the request may carry the expected target, to help achieve the expected target of the second apparatus for preventing the signaling storm.

Optionally, in another implementation scenario of the foregoing embodiment, the method 400 further includes: The first apparatus registers a first MDAS and a second MDAS, where capability information in a registration parameter corresponding to the first MDAS indicates that the first MDAS is capable of determining whether the signaling storm event exists, and capability information in a registration parameter corresponding to the second MDAS indicates that the second MDAS is capable of providing a recommendation for the network element in the network.

The first apparatus may send a request message to a management service (management service, MnS) registration (registration) network element, to request to create the registration parameter of the first MDAS and the registration parameter of the second MDAS. After receiving the request message, the management service registration network element creates the registration parameter of the first MDAS and the registration parameter of the second MDAS based on the request message. Table 3 shows the registration parameter of the first MDAS or the second MDAS.

**Table 3 Registration parameter of the first MDAS or registration parameter of the second MDAS**

| |
|---|
| Label (MnSLabel) |
| Type (MnSType) |
| Version (MnSVersion) |
| Access address (MnSAddress) |
| Management scope (MnSScope) |
| Supported capability (supportedCapabilities) |

The label may indicate an identifier of the first MDAS or an identifier of the second MDAS. The type may include MDAS, and the type indicates that a service type of the first MDAS or a service type of the second MDAS is MDAS. The access address may indicate an access address of the first MDAS or an access address of the second MDAS. The management scope indicates a management scope of the first MDAS or a management scope of the second MDAS. For example, the management scope corresponds to an identifier of a subnetwork (subnetwork) that may be managed by the first MDAS. The supported capability includes fault management (fault management), signaling analysis (signaling analysis), prevention assessment, and the like. The supported capability may indicate capability information supported by an MDAS. The fault management may indicate that a capability of the MDAS supports in determining whether the signaling storm event exists. The signaling analysis may indicate that the capability of the MDAS supports in providing a recommendation for the network element in the network. The fault management capability may be further subdivided, for example, may be divided into a capability supporting management of signaling congestion-type faults and a capability not supporting management of signaling congestion-type faults.

The capability information in the registration parameter is carried in a field of the supported capability. For example, a supported capability of the first MDAS may be fault management, and a signaling congestion-type fault is supported. A supported capability of the second MDAS may be signaling analysis.

According to the foregoing solution, the second apparatus may access the access address of the first MDAS or the access address of the second MDAS based on a requirement, to avoid a delay caused by identifying an intention of the second apparatus and invoking a corresponding MDAS by the first apparatus, so as to improve efficiency of network analysis.

Optionally, in another implementation scenario of the foregoing embodiment, the method 400 further includes: The second apparatus queries a registration parameter of the first apparatus. The second apparatus receives a registration parameter of a first management data analytics service MDAS and a registration parameter of a second MDAS, where capability information in the registration parameter corresponding to the first MDAS indicates that the first MDAS is capable of determining whether the signaling storm event exists, and capability information in the registration parameter corresponding to the second MDAS indicates that the second MDAS is capable of providing a recommendation for the network element in the network.

According to the foregoing solution, the second apparatus may access an access address of the first MDAS or an access address of the second MDAS based on a requirement, to avoid a delay caused by identifying an intention of the second apparatus and invoking a corresponding MDAS by the first apparatus, so as to improve efficiency of network analysis.

FIG. 5 is a schematic flowchart of a registration method 500 according to an embodiment of this application. The following describes the method 500 with reference to FIG. 5.

S510: An MDAF 320 sends a request message to an MnS registration network element, where the request message is for requesting to create a registration parameter. Correspondingly, the MnS registration network element receives the request message from the MDAF 320.

The MDAF 320 may be a first apparatus. The registration parameter may be a registration parameter of a first MDAS or a registration parameter of a second MDAS. The registration parameter may also be referred to as MnS information (information, Info).

S520: The MnS registration network element creates the registration parameter, to complete registration.

For example, the registration parameter may be the registration parameter of the first MDAS or the registration parameter of the second MDAS. The registration parameter may include at least one of a label, a type, a version, an access address, a management scope, and a supported capability. For details, refer to the embodiment related to Table 3.

FIG. 6 is a schematic flowchart of a registration parameter query method 600 according to an embodiment of this application. The following describes the method 600 with reference to FIG. 6.

S610: An OSS 310 sends a query message to an MnS registration network element, where the query message is for requesting to query a registration parameter. Correspondingly, the MnS registration network element receives the query message from the OSS 310.

The OSS 310 may be a second apparatus.

S620: The MnS registration network element sends the registration parameter to the OSS 310. Correspondingly, the OSS 310 receives the registration parameter from the MnS registration network element.

For example, the registration parameter may include a registration parameter of a first MDAS and/or a registration parameter of a second MDAS. The registration parameter may include at least one of a label, a type, a version, an access address, a management scope, and a supported capability. For details, refer to the embodiment related to Table 3. The registration parameter may further include a registration parameter of another service. This is not limited in this application.

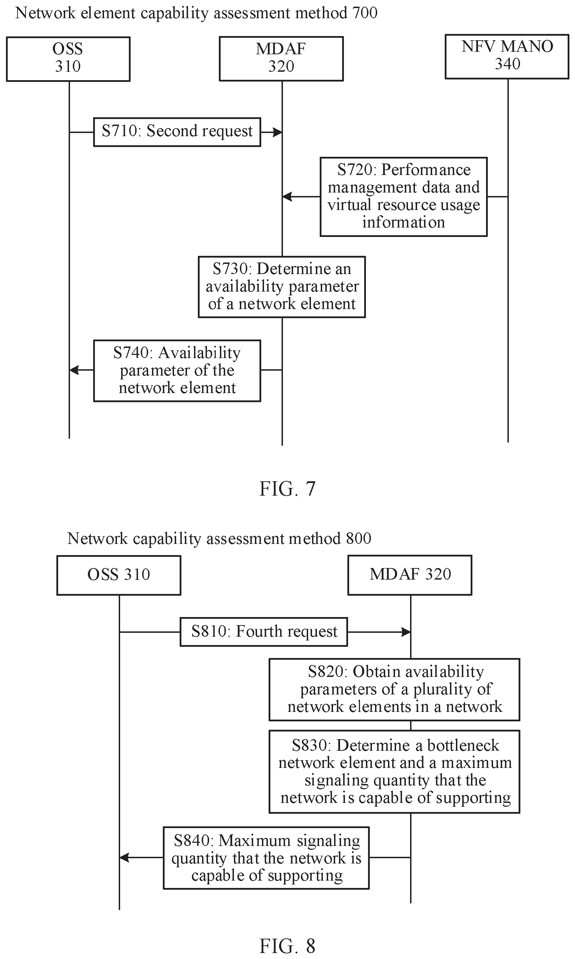

FIG. 7 is a schematic flowchart of a network element capability assessment method 700 according to an embodiment of this application. The following describes the method 700 with reference to FIG. 7.

S710: An OSS 310 sends a second request to an MDAF 320, where the second request is for requesting the MDAF 320 to determine availability parameters of a plurality of network elements in a network.

For example, the second request may include a network element identifier (also referred to as a network element type) and a target signaling type. For example, the second request includes an identifier of an AMF and registration signaling. In this case, a first apparatus may determine an availability parameter of the AMF in the case of a specific quantity of registration signaling based on the second request. The second request may be any request, and the second request may be carried in any message. The second request may have another name, for example, network element capability assessment request or network element availability assessment request. This is not limited in this application. The second request may be triggered by an event, for example, a holiday event or a network upgrade event. In other words, when an event occurs, the OSS 310 may perform S710. Alternatively, the second request may be actively sent by the OSS 310. In other words, the OSS 310 may actively perform S710 without depending on triggering of another event.

S720: The MDAF 320 receives performance management data and virtual resource usage information from an NFV MANO 340. Correspondingly, the NFV MANO 340 sends the performance management data and the virtual resource usage information to the MDAF 320.

The performance management data may be PM data. For example, when a first network element is an AMF, performance management data of the first network element may include a registration quantity, a registration success rate, and registration duration of a single user. It may be understood that the performance management data may further include another parameter, for example, average registration duration of a plurality of users, maximum registration duration of the plurality of users, and a quantity of registration failures.

The virtual resource usage information may indicate a usage status of a virtual resource. The virtual resource may include at least one of a virtual processor, a virtual memory, or a virtual disk. The virtual resource may further include another resource. The virtual resource usage information may include virtual processor utilization, virtual memory utilization, virtual disk utilization, and the like. The virtual resource usage information may further include other information.

In some embodiments, before S720, the method 700 further includes: The NFV MANO 340 receives a request message from the MDAF 320, where the request message is for requesting the performance management data and the virtual resource usage information. Correspondingly, the MDAF 320 sends the request message to the NFV MANO 340.

S730: The MDAF 320 determines the availability parameter of the network element based on the performance management data and the virtual resource usage information.

The availability parameter of the network element is performance management data of the network element in the case of a preset signaling quantity. The availability parameter may also be referred to as an availability indicator. The preset signaling quantity may be a specific quantity, or may be a relative quantity.

S740: The MDAF 320 sends the availability parameter of the network element to the OSS 310. Correspondingly, the OSS 310 receives the availability parameter of the network element from the MDAF 320.

Further, the OSS 310 may configure the network element based on the availability parameter of the network element.

FIG. 8 is a schematic flowchart of a network capability assessment method 800 according to an embodiment of this application. The following describes the method 800 with reference to FIG. 8.

S810: An OSS 310 sends a fourth request to an MDAF 320, where the fourth request is for requesting to determine a bottleneck network element and a maximum signaling quantity that can be supported by a network.

For example, the fourth request may include a network scope identifier and a target signaling type. The network scope identifier may be a subnetwork identifier (subnetwork ID), identifiers of a plurality of network elements, or specific subnetwork position information.

The fourth request may be any request, and the fourth request may be carried in any message. The fourth request may have another name, for example, network capability assessment request or network availability assessment request. This is not limited in this application.

The fourth request may be triggered by an event, for example, a holiday event or a network upgrade event. In other words, when an event occurs, the OSS 310 may perform S810. Alternatively, the fourth request may be actively sent by the OSS 310. In other words, the OSS 310 may actively perform S810 without depending on triggering of another event.

S820: The MDAF 320 obtains availability parameters of a plurality of network elements in the network.

In some embodiments, the MDAF 320 may obtain the availability parameter of the network element from configuration information of the network element. For example, the MDAF 320 may send a request message to an NFV MANO 340 or an OSS 330, to request the NFV MANO 340 or the OSS 330 to feed back an availability parameter of a second network element. The NFV MANO 340 or the OSS 330 queries configuration information of the second network element, to obtain the availability parameter of the second network element, and sends the availability parameter of the second network element to the MDAF 320. The MDAF 320 receives the availability parameter of the second network element from the NFV MANO 340 or the OSS 330, so that the MDAF 320 obtains the availability parameter of the second network element. If the network element is not configured with the availability parameter, S720 and S730 may be performed to determine the availability parameter. For another example, the MDAF 320 may determine the availability parameter of the network element based on performance management data and virtual resource usage information of the network element, to obtain the availability parameters of the network elements.

S830: The MDAF 320 determines, based on the availability parameters of the plurality of network elements in the network, the bottleneck network element and the maximum signaling quantity that the network is capable of supporting.

S840: The MDAF 320 sends, to the OSS 310, the maximum signaling quantity that the network is capable of supporting. Correspondingly, the OSS 310 receives, from the MDAF 320, the maximum signaling quantity that the network is capable of supporting.

In some embodiments, the method 800 further includes: The MDAF 320 sends information about the bottleneck network element to the OSS 310. Correspondingly, the OSS 310 receives the information about the bottleneck network element from the MDAF 320.

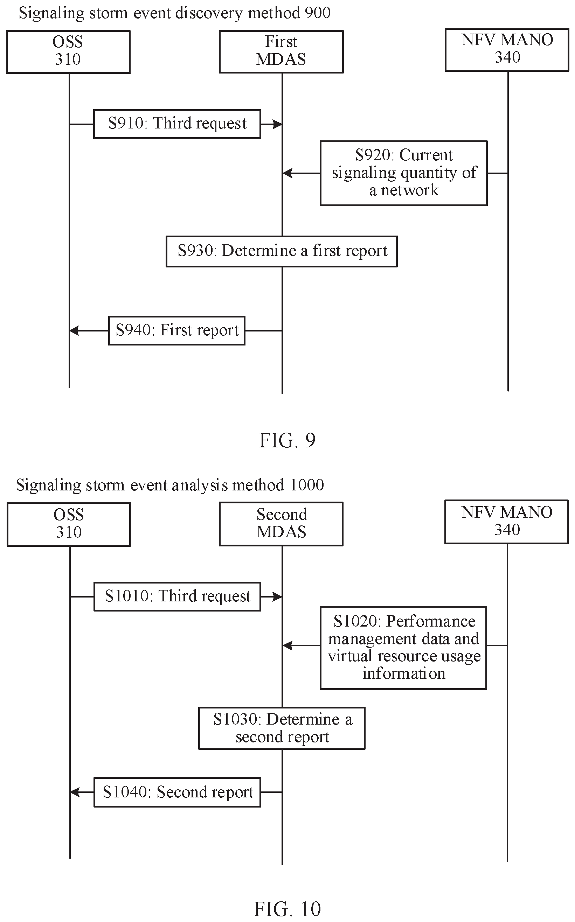

FIG. 9 is a schematic flowchart of a signaling storm event discovery method 900 according to an embodiment of this application. The following describes the method 900 with reference to FIG. 9.

S910: An OSS 310 sends a first request to a first MDAS, where the first request is for requesting the first MDAS to determine whether a signaling storm event exists, and the signaling storm event indicates a risk that a network will incur a signaling storm. For details, refer to the embodiment of S410. Details are not described herein again.

The first request may carry a network threshold. For example, in S830, the maximum signaling quantity that the network is capable of supporting and that is received by the OSS 310 from the MDAF 320 is 10 times a specific reference, and the network threshold in the first request sent by the OSS 310 may be 8 times a specific reference. It should be noted that the foregoing is merely an example, and does not constitute a limitation on this application.

S920: The first MDAS receives a current signaling quantity of the network from an NFV MANO 340. Correspondingly, the NFV MANO 340 sends the current signaling quantity of the network to the first MDAS.

In some embodiments, before S920, the method 900 further includes: The NFV MANO 340 receives a request message from the first MDAS, where the request message is for requesting the current signaling quantity of the network. Correspondingly, the first MDAS sends the request message to the NFV MANO 340.

S930: The first MDAS determines a first report based on the current signaling quantity of the network and the network threshold, where the first report indicates that the signaling storm event exists.

S940: The first MDAS sends the first report to the OSS 310. Correspondingly, the OSS 310 receives the first report from the first MDAS.

FIG. 10 is a schematic flowchart of a signaling storm event analysis method 1000 according to an embodiment of this application. The following describes the method 1000 with reference to FIG. 10.

S1010: An OSS 310 sends a third request to a second MDAS, where the third request is for requesting the second MDAS to provide a recommendation for a network element in a network.

S1020: The second MDAS receives performance management data and virtual resource usage information from an NFV MANO 340. Correspondingly, the NFV MANO 340 sends the performance management data and the virtual resource usage information to the second MDAS.

The performance management data may be PM data. For example, when a first network element is an AMF, performance management data of the first network element may include a registration quantity, a registration success rate, and registration duration of a single user. It may be understood that the performance management data may further include another parameter, for example, average registration duration of a plurality of users, maximum registration duration of the plurality of users, and a quantity of registration failures.

The virtual resource usage information may indicate a usage status of a virtual resource. The virtual resource may include at least one of a virtual processor, a virtual memory, or a virtual disk. The virtual resource may further include another resource. The virtual resource usage information may include virtual processor utilization, virtual memory utilization, virtual disk utilization, and the like. The virtual resource usage information may further include other information.

In some embodiments, before S1020, the method 1000 further includes: The NFV MANO 340 receives a request message from the second MDAS, where the request message is for requesting the performance management data and the virtual resource usage information. Correspondingly, the second MDAS sends the request message to the NFV MANO 340.

S1030: The second MDAS determines a second report based on the performance management data and the virtual resource usage information, where the second report indicates to scale the network element.

S1040: The second MDAS sends the second report to the OSS 310. Correspondingly, the OSS 310 receives the second report from the second MDAS.

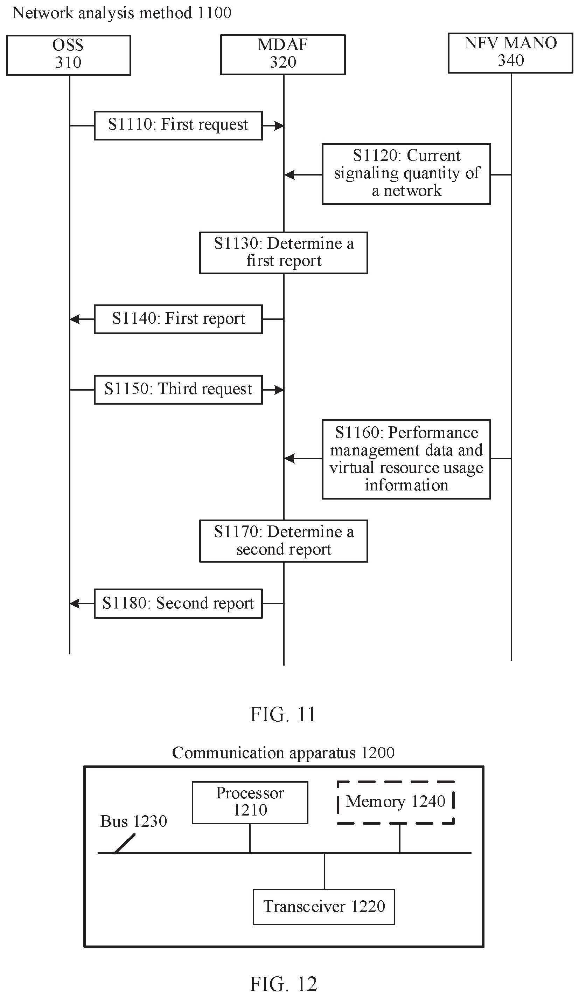

FIG. 11 is a schematic flowchart of another network analysis method 1100 according to an embodiment of this application. The method 1100 may be a combination of the method 900 and the method 1000. A difference lies in that, in the method 1100, a first MDAS and a second MDAS are not distinguished from each other, and the first MDAS and the second MDAS are combined as an MDAF 320. The following describes the method 1100 with reference to FIG. 11.

S1110: An OSS 310 sends a first request to the MDAF 320, where the first request is for requesting the MDAF 320 to determine whether a signaling storm event exists, and the signaling storm event indicates a risk that a network will incur a signaling storm. For details, refer to the embodiment of S410. Details are not described herein again.

The first request may carry a network threshold. For example, in S830, the maximum signaling quantity that the network is capable of supporting and that is received by the OSS 310 from the MDAF 320 is 10 times a specific reference, and the network threshold in the first request sent by the OSS 310 may be 8 times a specific reference. It should be noted that the foregoing is merely an example, and does not constitute a limitation on this application.

S1120: The MDAF 320 receives a current signaling quantity of the network from an NFV MANO 340. Correspondingly, the NFV MANO 340 sends the current signaling quantity of the network to the MDAF 320.

In some embodiments, before S1120, the method 1100 further includes: The NFV MANO 340 receives a request message from the MDAF 320, where the request message is for requesting the current signaling quantity of the network. Correspondingly, the MDAF 320 sends the request message to the NFV MANO 340.

S1130: The MDAF 320 determines a first report based on the current signaling quantity of the network and the network threshold, where the first report indicates that the signaling storm event exists.

S1140: The MDAF 320 sends the first report to the OSS 310. Correspondingly, the OSS 310 receives the first report from the MDAF 320.

S1150: The OSS 310 sends a third request to the MDAF 320, where the third request is for requesting the MDAF 320 to provide a recommendation for a network element in the network.

S1160: The MDAF 320 receives performance management data and virtual resource usage information from the NFV MANO 340. Correspondingly, the NFV MANO 340 sends the performance management data and the virtual resource usage information to the MDAF 320.

The performance management data may be PM data. For example, when a first network element is an AMF, performance management data of the first network element may include a registration quantity, a registration success rate, and registration duration of a single user. It may be understood that the performance management data may further include another parameter, for example, average registration duration of a plurality of users, maximum registration duration of the plurality of users, and a quantity of registration failures.

The virtual resource usage information may indicate a usage status of a virtual resource. The virtual resource may include at least one of a virtual processor, a virtual memory, or a virtual disk. The virtual resource may further include another resource. The virtual resource usage information may include virtual processor utilization, virtual memory utilization, virtual disk utilization, and the like. The virtual resource usage information may further include other information.

In some embodiments, before S1160, the method 1100 further includes: The NFV MANO 340 receives a request message from the MDAF 320, where the request message is for requesting the performance management data and the virtual resource usage information. Correspondingly, the MDAF 320 sends the request message to the NFV MANO 340.

S1170: The MDAF 320 determines a second report based on the performance management data and the virtual resource usage information, where the second report indicates to scale the network element.

S1180: The MDAF 320 sends the second report to the OSS 310. Correspondingly, the OSS 310 receives the second report from the MDAF 320.

The following describes apparatus embodiments corresponding to the method embodiments of this application. The following briefly describes only apparatuses. For specific implementation steps and details of the solutions, refer to the foregoing method embodiments.

To implement functions in the methods provided in this application, both the terminal device and the network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 12 is a block diagram of a communication apparatus 1200 according to an embodiment of this application. The communication apparatus 1200 includes a processor 1210 and a transceiver 1220. The processor 1210 and the transceiver 1220 may be connected to each other through a bus 1230. The communication apparatus 1200 may be a first apparatus, or may be a second apparatus.

Optionally, the communication apparatus 1200 may further include a memory 1240. The memory 1240 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1240 is configured to store related instructions and data.

The processor 1210 may be one or more central processing units (central processing unit, CPU). When the processor 1210 is one CPU, the CPU may be a single-core CPU, or may be a multi-core CPU. The processor 1210 may be a signal processor, a chip, or another integrated circuit that can implement the method in this application, or some circuits that are in the foregoing processor, chip, or integrated circuit and that are configured to perform a processing function. In addition, the transceiver 1220 may also be referred to as an input/output interface or a communication interface. The transceiver 1220 is configured to input or output a signal or data, or may be an input/output circuit.

When the communication apparatus 1200 is the first apparatus, for example, the communication apparatus 1200 includes the processor 1210 and the transceiver 1220. The transceiver 1220 is configured to receive a first request from the second apparatus, where the first request is for requesting the first apparatus to determine whether a signaling storm event exists, and the signaling storm event indicates a risk that a network will incur a signaling storm. The processor 1210 is configured to obtain a network threshold, where the network threshold indicates a signaling quantity that the network is capable of supporting, and determines a first report based on the network threshold and a current signaling quantity of the network, where the first report indicates that the signaling storm event exists.

When the communication apparatus 1200 is the second apparatus, for example, the communication apparatus 1200 includes the transceiver 1220. The transceiver 1220 is configured to send a first request to the first apparatus, where the first request is for requesting the first apparatus to determine whether a signaling storm event exists, the signaling storm event indicates that the risk of a signaling storm occurring in a network exists, and is configured to receive a first report from the first apparatus, where the first report indicates that the signaling storm event exists.

The foregoing descriptions are merely an example for description. For specific content, refer to the content shown in the foregoing method embodiments. For an implementation of the operations in FIG. 6, refer to the corresponding descriptions of the method embodiments shown in FIG. 3 to FIG. 11.

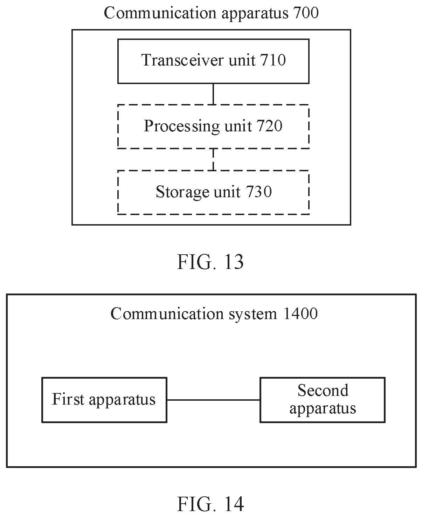

FIG. 13 is a block diagram of another communication apparatus 1300 according to an embodiment of this application. The communication apparatus 1300 may be a first apparatus or a second apparatus, or may be a chip or a module in the first apparatus or the second apparatus, and is configured to implement the methods involved in the foregoing embodiments. The communication apparatus 1300 includes a transceiver unit 1310. The following describes the transceiver unit 1310 by using an example.

The transceiver unit 1310 may include a sending unit and a receiving unit. The sending unit is configured to execute a sending action of the communication apparatus, and the receiving unit is configured to execute a receiving action of the communication apparatus. For ease of description, in this embodiment of this application, the sending unit and the receiving unit are combined into one transceiver unit. Unified descriptions are provided herein, and details are not described below.

When the communication apparatus 1300 is the first apparatus, for example, the transceiver unit 1310 is configured to receive a first request from the second apparatus.

Optionally, the communication apparatus 1300 may further include a processing unit 1320, configured to perform content related to steps such as processing and coordination of the first apparatus.

When the communication apparatus 1300 is the second apparatus, for example, the transceiver unit 1310 is configured to send a first request to the first apparatus.

Optionally, the communication apparatus 1300 may further include a processing unit 1320, configured to perform content related to steps such as processing and coordination of the second apparatus.

The foregoing content is merely used as an example for description. When the communication apparatus 1300 is the first apparatus or the second apparatus, the communication apparatus 1300 is responsible for performing the methods or steps related to the first apparatus or the second apparatus in the foregoing method embodiments.

Optionally, the communication apparatus 1300 further includes a storage unit 1330, and the storage unit 1330 is configured to store a program or code used for performing the foregoing methods.

The apparatus embodiments shown in FIG. 12 and FIG. 13 are used for implementing embodiments in FIG. 3 to FIG. 11. For specific execution steps and methods of the apparatuses shown in FIG. 12 and FIG. 13, refer to the content in the foregoing method embodiments.

FIG. 14 is a block diagram of a communication system 1400 according to an embodiment of this application. The communication system 1400 includes a first apparatus and a second apparatus. The first apparatus and the second apparatus are configured to implement embodiments in FIG. 3 to FIG. 11.

This application further provides a chip. The chip includes a processor, configured to invoke instructions from a memory and run the instructions stored in the memory, to cause a communication apparatus on which the chip is installed to perform the method in the foregoing examples.

This application further provides another chip. The chip includes an input interface, an output interface, and a processor. The input interface, the output interface, and the processor are connected through an internal connection path. The processor is configured to execute code in a memory; and when the code is executed, the processor is configured to perform the methods in the foregoing examples. Optionally, the chip further includes the memory, and the memory is configured to store a computer program or the code.

This application further provides a processor, configured to be coupled to a memory, and configured to perform the method and the function that are related to the first apparatus or the second apparatus in any one of the foregoing embodiments.

Another embodiment of this application provides a computer program product including instructions. When the computer program product is run on a computer, the method in the foregoing embodiments is implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or the communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network analysis method, comprising:
receiving, by a first apparatus, a first request from a second apparatus, wherein the first request is for requesting the first apparatus to determine whether a signaling storm event exists, and the signaling storm event indicates a risk that a network will incur a signaling storm;
obtaining, by the first apparatus, a network threshold, wherein the network threshold indicates a signaling quantity that the network is capable of supporting; and
determining, by the first apparatus, a first report based on the network threshold and a current signaling quantity of the network, wherein the first report indicates that the signaling storm event exists.

2. The method according to claim 1, wherein the first report comprises at least one of abnormal network element information, type information, cause information, ratio information, or duration information, the abnormal network element information indicates a network element whose traffic is abnormal when the signaling storm event occurs, the type information indicates that an event type is signaling storm, the cause information indicates a cause of the signaling storm event, the ratio information indicates a ratio of the current signaling quantity to a historical signaling quantity of the network, and the duration information indicates predicted duration of the signaling storm event.

3. The method according to claim 1 or 2, wherein obtaining, by the first apparatus, the network threshold comprises:
receiving, by the first apparatus, the network threshold from the second apparatus.

4. The method according to claim 3, further comprising:
sending, by the first apparatus to the second apparatus, a maximum signaling quantity that the network is capable of supporting.

5. The method according to claim 4, wherein the network threshold is less than the maximum signaling quantity that the network is capable of supporting.

6. The method according to claim 4 or 5, further comprising:
determining, by the first apparatus based on availability parameters of a plurality of network elements in the network, the maximum signaling quantity that the network is capable of supporting, wherein the plurality of network elements in the network comprise a first network element, and an availability parameter of the first network element is performance management data of the first network element in the case of a first preset signaling quantity.

7. The method according to claim 6, further comprising:
obtaining, by the first apparatus, the performance management data of the first network element and virtual resource usage information of the first network element; and
determining, by the first apparatus, the availability parameter of the first network element based on the performance management data of the first network element and the virtual resource usage information of the first network element.

8. The method according to claim 7, further comprising:
sending, by the first apparatus, the availability parameter of the first network element to the second apparatus.

9. The method according to claim 7 or 8, further comprising:
receiving, by the first apparatus, a second request from the second apparatus, wherein the second request is for requesting the first apparatus to determine the availability parameters of the plurality of network elements in the network.

10. The method according to any one of claims 1 to 9, wherein the plurality of network elements in the network further comprise a second network element, and the method further comprises:
obtaining, by the first apparatus, an availability parameter of the second network element, wherein the availability parameter of the second network element is performance management data of the second network element in the case of a second preset signaling quantity, and when the signaling storm occurs, the availability parameter of the second network element does not meet an expected target; and
determining, by the first apparatus, a second report based on the availability parameter of the second network element, wherein the second report indicates to scale the second network element.

11. The method according to claim 10, wherein the expected target comprises expected duration for resolving the signaling storm and/or a maximum user quantity that the network is capable of supporting.

12. The method according to claim 10 or 11, further comprising:
receiving, by the first apparatus, a third request from the second apparatus, wherein the third request is for requesting the first apparatus to provide a recommendation for the network element in the network, and the third request comprises the expected target.

13. The method according to any one of claims 10 to 12, further comprising:
registering, by the first apparatus, a first management data analytics service MDAS and a second MDAS, wherein capability information in a registration parameter corresponding to the first MDAS indicates that the first MDAS is capable of determining whether the signaling storm event exists, and capability information in a registration parameter corresponding to the second MDAS indicates that the second MDAS is capable of providing a recommendation for the network element in the network.

14. A network analysis method, comprising:
sending, by a second apparatus, a first request to a first apparatus, wherein the first request is for requesting the first apparatus to determine whether a signaling storm event exists, and the signaling storm event indicates a risk that a network will incur a signaling storm; and receiving, by the second apparatus, a first report from the first apparatus, wherein the first report indicates that the signaling storm event exists.

15. The method according to claim 14, further comprising:
sending, by the second apparatus, a network threshold to the first apparatus, wherein the network threshold indicates a signaling quantity that the network is capable of supporting.

16. The method according to claim 15, further comprising:
receiving, by the second apparatus from the first apparatus, a maximum signaling quantity that the network is capable of supporting; and
determining, by the second apparatus, the network threshold based on the maximum signaling quantity that the network is capable of supporting.

17. The method according to claim 16, wherein the network threshold is less than the maximum signaling quantity or a maximum signaling multiple that the network is capable of supporting.

18. The method according to any one of claims 14 to 17, wherein a plurality of network elements in the network comprises a first network element, and the method further comprises:
receiving, by the second apparatus, an availability parameter of the first network element from the first apparatus, wherein the availability parameter of the first network element is performance management data of the first network element in the case of a first preset signaling quantity; and
configuring, by the second apparatus, the first network element based on the availability parameter of the first network element.

19. The method according to claim 18, further comprising:
sending, by the second apparatus, a second request to the first apparatus, wherein the second request is for requesting the first apparatus to determine availability parameters of the plurality of network elements in the network.

20. The method according to any one of claims 14 to 19, wherein the plurality of network elements in the network further comprise a second network element, and the method further comprises:
receiving, by the second apparatus, a second report from the first apparatus, wherein the second report indicates to scale the second network element, and when the signaling storm occurs, an availability parameter of the second network element does not meet an expected target.

21. The method according to claim 20, wherein the expected target comprises expected duration for resolving the signaling storm and/or a maximum user quantity that the network is capable of supporting.

22. The method according to claim 20 or 21, wherein a third request comprises the expected target, the third request is for requesting the first apparatus to provide a recommendation for the network element in the network, and the method further comprises:
sending, by the second apparatus, the third request to the first apparatus.

23. The method according to any one of claims 20 to 22, further comprising:
querying, by the second apparatus, a registration parameter of the first apparatus; and
receiving, by the second apparatus, a registration parameter of a first management data analytics service MDAS and a registration parameter of a second MDAS, wherein capability information in the registration parameter corresponding to the first MDAS indicates that the first MDAS is capable of determining whether the signaling storm event exists, and capability information in the registration parameter corresponding to the second MDAS indicates that the second MDAS is capable of providing a recommendation for the network element in the network.

24. A communication apparatus, comprising at least one module, wherein the at least one module is configured to perform the method according to any one of claims 1 to 13, or the at least one module is configured to perform the method according to any one of claims 14 to 23.

25. A communication system, comprising a first apparatus and a second apparatus, wherein the first apparatus is configured to perform the method according to any one of claims 1 to 13, and the second apparatus is configured to perform the method according to any one of claims 14 to 23.

26. A communication apparatus, comprising a processing circuit and an input/output interface, wherein the input/output interface is configured to input and/or output a signal, and the processing circuit is configured to perform the method according to any one of claims 1 to 13, or the processing circuit is configured to perform the method according to any one of claims 14 to 23.

27. A computer-readable storage medium, wherein the computer-readable storage medium stores a computer program or instructions, and when the computer program or the instructions are run on a computer, the method according to any one of claims 1 to 13 is performed, or the method according to any one of claims 14 to 23 is performed.

28. A communication method, wherein the method is applied to a first apparatus and a second apparatus, and the method comprises:
performing, by the first apparatus, the method according to any one of claims 1 to 13, and performing, by the second apparatus, the method according to any one of claims 14 to 23.

29. A computer program product, wherein the computer program product stores computer-readable instructions, and when the computer-readable instructions are run on a computer, the computer is caused to perform the method according to any one of claims 1 to 23.
